# DEMANDE DE BREVET EUROPEEN

(11) **EP 0 810 134 A1**
(43) Date de publication de la demande: **03.12.1997**
(21) Numéro de dépôt: 97401168.6
(22) Date de dépôt: 28.05.1997
(51) Int. Cl.: B60S 1/38

(54) **Balai d'essuie-glace**

(30) Priorité: 30.05.1996 FR 9606660
(71) Demandeur: VALEO SYSTEMES D'ESSUYAGE, 78321 La Verrière (FR)
(72) Inventeur: Raynaud, Richard, 63320 Champeix (FR)
(74) Mandataire: Le Forestier, Eric

(57) **Abrégé**

L'invention concerne un balai d'essuie-glace, du type qui comprend une raclette d'essuyage avec un corps (1) en caoutchouc ou en matière analogue dans lequel est montée, longitudinalement, une barrette rigidificatrice (5).

Il se caractérise par le fait que les bords longitudinaux (50) de ladite barrette (5) sont rabattus du côté de la partie d'essuyage de ladite raclette.

## Description

La présente invention concerne un balai d'essuie-glace.

On a déjà proposé d'équiper le corps en caoutchouc ou matière analogue de raclettes d'essuie-glace d'une barrette, par exemple métallique. La barrette est noyée dans le corps de la raclette et elle a pour fonction de lui conférer une certaine rigidité, en l'occurrence dans le plan parallèle à la surface à essuyer.

On peut se reporter au document FR-A-2 253 649 qui illustre ce type de raclette.

Une difficulté rencontrée avec ces raclettes réside dans leur fixation au balai d'essuie-glace. De manière courante, un balai d'essuie-glace comprend un certain nombre de palonniers et/ou de bras de levier articulés les uns sur les autres, qui présentent des paires de griffes formées à leurs extrémités libres.

Pour procéder au montage des raclettes, il est nécessaire de faire coulisser longitudinalement les griffes le long de la partie qui porte la barrette, ce qui est long et fastidieux.

Un autre problème résulte dans le fait que l'adhérence entre le corps en caoutchouc et la barrette n'est pas toujours parfaite, ce qui se traduit par une usure prématurée ou une casse des raclettes.

Enfin, la connexion entre les griffes et la raclette n'est pas toujours réalisée de manière efficace, ce qui peut poser des problèmes de déverrouillage intempestif.

La présente invention a pour but de remédier à ces inconvénients.

Ainsi, le balai conforme à l'invention, qui comprend une raclette d'essuyage avec un corps en caoutchouc ou en matière analogue dans lequel est montée, longitudinalement, une barrette rigidificatrice, se caractérise par le fait que les bords longitudinaux de ladite barrette sont rabattus du côté de la partie d'essuyage de ladite raclette.

De cette manière, il est possible de connecter les griffes à la raclette, non plus par enfilage longitudinal, mais par encliquetage dirigé de haut en bas, c'est-à-dire perpendiculaire au corps de celle-ci, ce qui est plus simple et plus rapide.

Par ailleurs, selon une caractéristique avantageuse, lesdits bords affleurent au moins localement à la surface du caoutchouc.

De cette façon, on peut procéder à un encliquetage franc des griffes sur les raclettes, ce qui garantit la qualité de verrouillage.

Par ailleurs, selon d'autres caractéristiques avantageuses mais non limitatives :
- lesdits bords sont rabattus selon une direction généralement oblique ;
- la barrette présente une section transversale en arc de cercle ;
- la barrette comporte une partie centrale sensiblement plane, lesdits bords longitudinaux formant un angle obtus avec la partie centrale.
- lesdits bords affleurent à la surface du caoutchouc sur toute leur longueur et la barrette comporte des perforations ;
- il comporte des griffes de fixation aptes à venir en prise avec la raclette dans les régions où les bords de la barrette affleurent ;
- les griffes sont encliquetées sur le corps de raclette selon une direction généralement perpendiculaire au plan d'essuyage de la raclette ;
- les griffes comportent des ergots aptes à coopérer avec les bords de ladite barrette.

D'autres caractéristiques et avantages de la présente invention apparaîtront à la lecture de la description détaillée de certains modes de réalisation. Cette description sera faite en référence aux dessins annexés dans lesquels :
- la figure 1 est une vue en coupe transversale d'une barrette de balai d'essuie-glace illustrant l'a r t antérieur ;
- la figure 2 est également une vue en coupe transversale d'une barrette de balai d'essuie-glace conforme à la présente invention ;
- les figures 3 et 4 sont des vues en bout de certaines formes de réalisation de la barrette ;
- la figure 5 est une vue en perspective d'une autre forme de réalisation de la barrette ;
- la figure 6 est une vue en perspective d'encore une autre forme de réalisation de la barrette ;
- la figure 7 est une vue en perspective d'une griffe équipant un balai d'essuie-glace ;
- les figures 8 et 9 sont des schémas destinés à illustrer la manière dont coopèrent griffe et raclette.

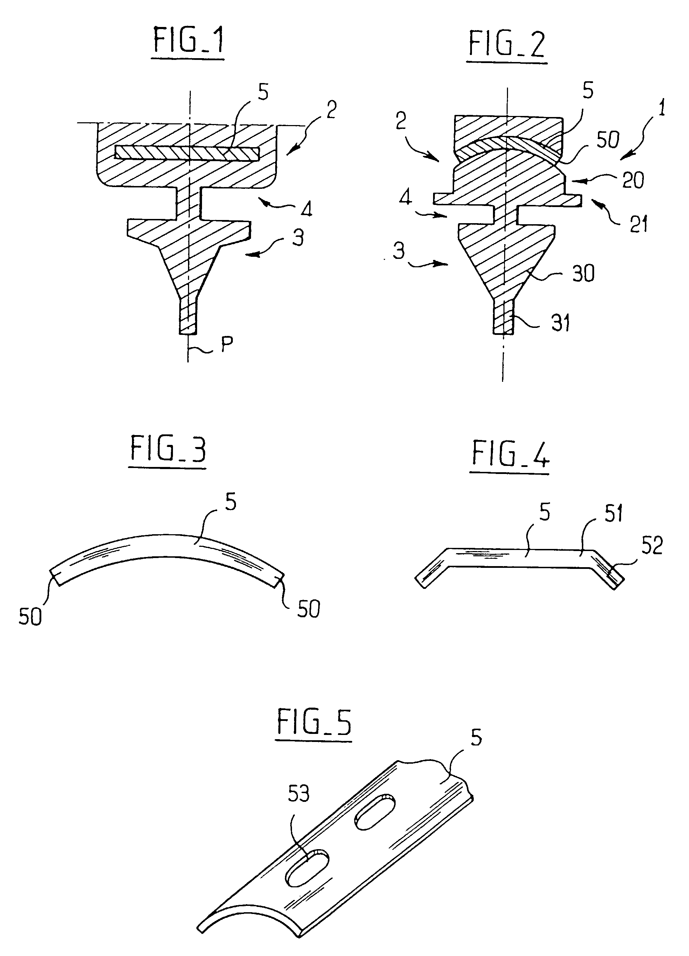

En se reportant d'abord à la figure 1, la raclette 1 de type connu comporte une tête 2 et une partie d'essuyage 3. Elles sont séparées l'une de l'autre par une fine languette longitudinale 4 qui assure la continuité de la matière et autorise le pivotement de la partie d'essuyage 3 par rapport à la tête 2

La raclette est généralement formée de caoutchouc ou d'une matière analogue.

De manière bien connue, la tête 2 comporte une barrette rigidificatrice 5 qui s'étend perpendiculairement au plan de symétrie longitudinal **P** de la raclette, c'est-à-dire horizontalement sur la figure 2.

Cette barrette donne à la raclette une certaine rigidité dans un plan parallèle à la surface à essuyer et une certaine souplesse dans un plan perpendiculaire à cette surface.

En référence cette fois-ci à la figure 2, la raclette du balai d'essuie-glace conforme à l'invention présente la même structure générale, à savoir une tête 2, une partie d'essuyage 3 et une languette intermédiaire 4.

La tête comprend une partie supérieure 20 de section sensiblement carrée. Elle se raccorde à une partie inférieure 21 de petite épaisseur définissant longitudinalement deux ailes opposées débordant de part et d'autre de la partie supérieure.

La partie d'essuyage 3 comprend une partie proéminente 30 de section approximativement triangulaire qui se prolonge vers le bas par une languette longitudinale 31. Ce sont les arêtes inférieures de cette languette qui assurent la fonction d'essuyage proprement dite.

Conformément à l'invention, une barrette rigidificatrice 5 est montée à l'intérieur de la tête 2. Il s'agit par exemple d'une barrette métallique. Elle peut y être incluse soit par une technique de surmoulage, soit de co-injection.

Comme le montrent les figure 2 et 3, cette barrette est arquée transversalement, de sorte que ses bords longitudinaux 50 sont rabattus en biais vers le bas, c'est-à-dire du côté de la partie d'essuyage de la raclette.

Du fait de cette conformation, il va être possible d'encliqueter des griffes sur la raclette, directement de haut en bas, comme nous le verrons plus loin dans la description.

Dans la forme de réalisation de la figure 2, les bords longitudinaux 50 affleurent latéralement à la surface du caoutchouc.

Ils peuvent affleurer localement ou sur toute leur longueur.

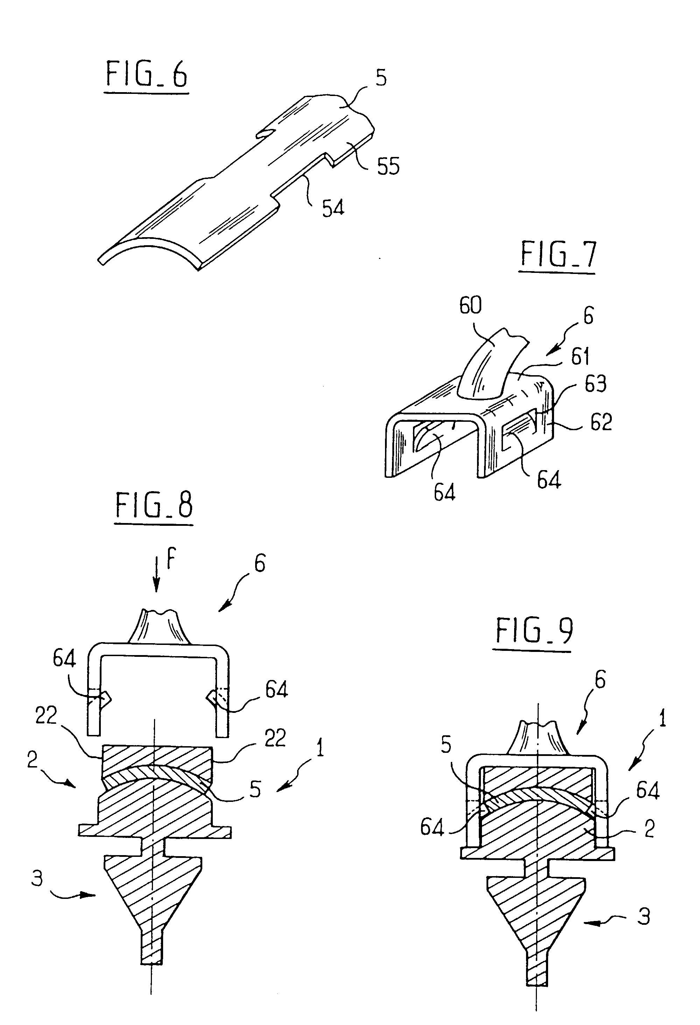

Dans l'hypothèse où ils affleurent localement, la barrette a par exemple la forme représentée à la figure 6. Dans cette forme de réalisation, les bords sont pourvus de découpures 54 à contour sensiblement rectangulaire, celles-ci définissant deux à deux des sortes de créneaux 55 qui affleurent à la surface du caoutchouc.

Dans l'hypothèse où ils affleurent sur toute leur longueur, ce qui est le cas de la figure 5, le corps de la barrette comporte alors des perforations 53. Celles-ci sont destinées à être comblées par le caoutchouc, de manière à assurer une continuité de matière entre le dessus et le dessous de la barrette. De cette manière, il y a une cohésion satisfaisante entre la matière de la barrette et l'ensemble du caoutchouc.

On notera que ces perforations peuvent être prévues sur la barrette quelle que soit la section qu'elle présente. En particulier, cette barrette peut être rigoureusement plane.

Dans la forme de réalisation de la figure 4, la barrette comporte une partie centrale 51 sensiblement plane, les bords longitudinaux 52 formant un angle obtus avec la partie centrale.

A la figure 7 est représentée une griffe 6 de balai d'essuie-glace destinée à venir en prise avec une barrette telle que celle précédemment décrite.

Cette griffe est située à l'extrémité d'un bras ou palonnier 60. Elle a une forme d'étrier en "U" avec une base 61 de jonction au bras 60 et deux ailes parallèles 62.

Dans ces ailes sont formées deux découpures identiques 63 en forme de "U" inversé et la partie de manière ainsi délimitée est repoussée vers l'intérieur de l'étrier.

On forme ainsi deux pattes ou ergots 64 qui sont dirigés en oblique vers l'intérieur de l'étrier.

L'écartement entre les ailes 62 est prévu pour correspondre sensiblement à la distance qui sépare les flancs longitudinaux 22 de la tête 2 de la raclette.

La disposition particulière de la barrette 5 au sein de la raclette va permettre la mise en place de la griffe par un mouvement d'encliquetage de haut en bas.

C'est ce qui est représenté aux figures 8 et 9.

Dans une première étape, la griffe est amenée au-dessus de la raclette de manière à ce que ses ailes 62 surplombent celle-ci.

On fait alors descendre la griffe dans le sens de la flèche **f** de manière à ce que les ailes 62 coulissent le long des flancs 22. Les extrémités des pattes 64 repoussent la matière de la raclette. Ce mouvement est poursuivi jusqu'à ce qui les extrémités libres des ailes 62 viennent reposer sur la partie inférieure 21 de la tête.

Dans cette position, les pattes 64 sont venues s'encliqueter sur la tête, dans le prolongement des extrémités de la barrette 5.

Dans le cas où la barrette est conforme à la figure 5, les griffes viennent s'encliqueter de part et d'autre des régions 55 qui affleurent à la surface du caoutchouc.

Le blocage longitudinal des griffes par rapport à la raclette peut être assuré par sertissage d'une de celles-ci.

## Revendications

1. Balai d'essuie-glace, qui comprend une raclette d'essuyage avec un corps (1) en caoutchouc ou en matière analogue dans lequel est montée, longitudinalement, une barrette rigidificatrice (5), caractérisé par le fait que les bords longitudinaux (50, 52) de ladite barrette (5) sont rabattus du côté de la partie d'essuyage de ladite raclette.

2. Balai selon la revendication 1, caractérisé par le fait que lesdits bords (50, 52) sont rabattus selon une direction généralement oblique.

3. Balai selon la revendication 1 ou 2, caractérisé par le fait que la barrette (5) présente une section transversale en arc de cercle.

4. Balai selon la revendication 1 ou 2, caractérisé par le fait que la barrette comporte une partie centrale (51) sensiblement plane, lesdits bords longitudinaux (52) formant un angle obtus avec la partie centrale.

5. Balai selon l'une des revendications 1 à 4, caractérisé par le fait que lesdits bords (50, 52) affleurent au moins localement à la surface du caoutchouc.

6. Balai selon la revendication 5, caractérisé par le fait que lesdits bords (50, 52) affleurent à la surface du caoutchouc sur toute leur longueur et par le fait que la barrette comporte des perforations (53).

7. Balai selon la revendication 5 ou 6, caractérisé par le fait qu'il comporte des griffes de fixation (6) aptes à venir en prise avec la raclette dans les régions où les bords (50, 52) de la barrette affleurent.

8. Balai selon la revendication 7, caractérisé par le fait que les griffes (6) sont encliquetées sur le corps de raclette (1) selon une direction généralement perpendiculaire au plan d'essuyage de la raclette.

9. Balai selon la revendication 7 ou 8, caractérisé par le fait que les griffes (6) comportent des ergots (64) aptes à coopérer avec les bords (50, 52) de ladite barrette.
